# EUROPÄISCHE PATENTANMELDUNG

(11) **EP 3 808 164 A1**
(43) Veröffentlichungstag der Anmeldung: **21.04.2021**
(21) Anmeldenummer: 20401050.8
(22) Anmeldetag: 01.10.2020
(51) Int. Cl.: A01C 7/18, A01C 7/16

(54) **PORTIONIEREINRICHTUNG FÜR KÖRNIGES MATERIAL**

(30) Priorität: 17.10.2019 DE 102019128025
(71) Anmelder: Amazonen-Werke H. Dreyer GmbH & Co. KG, 49205 Hasbergen (DE)
(72) Erfinder: Hilbert, Florenz, 48282 Emsdetten (DE); Johannaber, Stefan Jan, 49536 Lienen (DE); Teckemeyer, Stephan, 49504 Lotte (DE)

(57) **Zusammenfassung**

Die Erfindung betrifft eine Portioniereinrichtung (10) für körniges Material, insbesondere Dünger oder Saatgut, mit einer Portionierkammer (20), einem rotatorisch antreibbaren Portionierelement (26), welches in der Portionierkammer (20) angeordnet und dazu eingerichtet ist, beim Ausführen einer Rotationsbewegung sich innerhalb der Portionierkammer (20) befindende Körner zu einer Kornportion zusammenzuführen, und einer Teilungseinrichtung, mittels welcher die Kornportion in eine aus der Portionierkammer (20) auszuleitende Abgabeportion und zumindest eine in der Portionierkammer (20) verbleibende Pufferportion teilbar ist.

## Beschreibung

Die Erfindung betrifft eine Portioniereinrichtung für körniges Material nach dem Oberbegriff des Patentanspruchs 1, eine Landmaschine nach dem Oberbegriff des Patentanspruchs 14 und ein Verfahren zum Portionieren von körnigem Material nach dem Oberbegriff des Patentanspruchs 15.

Bei der Ausbringung von körnigem Material, wie beispielsweise Dünger, Pflanzenschutzmittel, wie Insektizide oder Fungizide, oder Saatgut, ist es in einigen Anwendungsfällen vorteilhaft oder sogar erforderlich, dass körnige Material in Form von einzelnen Portionen auf der landwirtschaftlichen Nutzfläche abzulegen. Zum Erzeugen entsprechender Abgabeportionen aus körnigem Material weisen entsprechende Landmaschinen Portioniereinrichtungen auf.

Es hat sich herausgestellt, dass Portioniereinrichtungen mit einem rotatorisch angetriebenen Portionierelement eine vergleichsweise präzise Steuerung der Portionsbildung erlauben und gleichzeitig eine hohe Ablagegenauigkeit ermöglichen. Bei entsprechenden Portioniereinrichtungen führt das Portionierelement in einer Portionierkammer eine Rotationsbewegung aus. Während der Rotationsbewegung sammelt das Portionierelement sich in der Portionierkammer befindliche Dünger- oder Saatkörner ein und führt diese zu einer Kornportion zusammen.

In der Praxis hat sich außerdem gezeigt, dass der einer Portioniereinrichtung zugeführte Materialstrom gewissen Schwankungen unterliegt. Unabhängig davon, ob das körnige Material der Portioniereinrichtung pneumatisch über einen Förderluftstrom oder unter Schwerkrafteinwirkung zugeführt wird, treten Unregelmäßigkeiten in der der Portioniereinrichtung kontinuierlich zugeführten Materialmenge auf. Die Unregelmäßigkeiten in der Materialzuführung führen zu der Erzeugung von Abgabeportionen mit unterschiedlichen Portionsgrößen, sodass auch Abweichungen von einer Soll-Portionsgröße auftreten. Aufgrund der Abweichungen von der Soll-Portionsgröße kann es zu erheblichen Ertragseinbußen kommen, da das Pflanzenwachstum bei ungeeigneten Materialmengen regelmäßig erheblich beeinträchtigt oder unzureichend gefördert wird.

Die der Erfindung zugrundeliegende Aufgabe besteht somit darin, den Einfluss von Schwankungen in dem einer Portioniereinrichtung bereitgestellten Materialstrom auf die Portionsgrößen der von der Portioniereinrichtung erzeugten Abgabeportionen zu verringern.

Die Aufgabe wird gelöst durch eine Portioniereinrichtung der eingangs genannten Art, wobei die erfindungsgemäße Portioniereinrichtung eine Teilungseinrichtung aufweist, mittels welcher die Kornportionen in eine aus der Portionierkammer auszuleitende Abgabeportion und zumindest eine in der Portionierkammer verbleibende Pufferportion teilbar ist.

Die Erfindung macht sich die Erkenntnis zunutze, dass durch eine Teilung einer zuvor erzeugten Kornportion in eine aus der Portionierkammer auszuleitende Abgabeportion und zumindest eine in der Portionierkammer verbleibende Pufferportion eine Vergleichmäßigung der Portionsgrößen bzw. der Kornmengen der erzeugten Abgabeportionen umgesetzt wird, wenn es zu Schwankungen in der Materialzuführung kommt. Der Einfluss von Unregelmäßigkeiten in dem der Portioniereinrichtung zugeführten Materialstrom wird durch die Teilung der erzeugten Kornportionen vor deren Ausleitung aus der Portioniereinrichtung erheblich reduziert. Wenn der Portioniereinrichtung zeitweise eine reduzierte Menge an körnigem Material zugeführt wird, wird der Einfluss der reduzierten Zuführmenge auf die Portionsgrößen durch das körnige Material, welches zuvor als Pufferportion in der Portionierkammer verblieben ist, erheblich verringert. Wenn der Portioniereinrichtung zeitweise eine zu große Menge an körnigem Material zugeführt wird, wird der Einfluss der erhöhten Zuführmenge auf die Portionsgrößen durch die vor der Portionsausleitung durchgeführte Portionsteilung erheblich reduziert.

Die Portioniereinrichtung weist vorzugsweise einen elektrischen Antrieb für das Portionierelement auf. Der elektrische Antrieb ist vorzugsweise ein Elektromotor. Die Portionierkammer befindet sich vorzugsweise in einem Gehäuse der Portioniereinrichtung.

Nach der Teilung der Kornportion in die Abgabeportion und die zumindest eine Pufferportion kann die Kornmenge der Abgabeportion und/oder der zumindest einen Pufferportion noch ansteigen, da das Portionierelement vorzugsweise dazu eingerichtet ist, beim Ausführen der Rotationsbewegung sich innerhalb der Portionierkammer befindende Körner der Abgabeportion und/oder der zumindest einen Pufferportion zuzuleiten.

Die Teilung der Kornportion in die Abgabeportion und die zumindest eine Pufferportion erfolgt vorzugsweise prozentual bzw. anteilig, sodass stets ein Teil der Kornportion als Pufferportion in der Portionierkammer zurückgehalten wird und ein Teil der Kornportion als Abgabeportion aus der Portionierkammer ausgeleitet wird. Auch wenn keine neuen Körner in die Portionierkammer einströmen, beispielsweise bei einer temporär unterbrochenen Materialzuführung, kommt es erneut zu einer Teilung des sich in der Portionierkammer befindlichen körnigen Materials, welches zuvor als Pufferportion in der Portionierkammer verblieben ist.

In einer bevorzugten Ausführungsform der erfindungsgemäßen Portioniereinrichtung weist diese einen Abgabepfad und/oder zumindest einen Pufferpfad auf. Die Abgabeportion wird innerhalb der Portionierkammer entlang des Abgabepfads bewegt. Alternativ oder zusätzlich wird die Abgabeportion innerhalb der Portionierkammer entlang des Abgabepfads aus der Portioniereinrichtung ausgeleitet. Die zumindest eine Pufferportion wird innerhalb der Portionierkammer entlang des zumindest einen Pufferpfads bewegt. Alternativ oder zusätzlich wird die zumindest eine Pufferportion entlang des zumindest einen Pufferpfads an einem Kammerauslass der Portionierkammer vorbeigeführt. Dadurch, dass die zumindest eine Pufferportion an dem Kammerauslass der Portionierkammer vorbeigeführt wird, verbleibt die zumindest eine Pufferportion in der Portionierkammer, wobei die Abgabeportion über den Kammerauslass der Portionierkammer aus der Portionierkammer ausgeleitet wird. Der Kammerauslass der Portionierkammer ist vorzugsweise in einer die Portionierkammer in Radialrichtung zumindest abschnittsweise begrenzenden Innenmantelfläche ausgebildet, sodass die Abgabeportion durch die Drehbewegung des Portionierelements durch den Kammerauslass aus der Portionierkammer herausgeschleudert wird. Der zumindest eine Pufferpfad kann beispielsweise seitlich an dem Kammerauslass vorbeilaufen.

Es ist darüber hinaus eine erfindungsgemäße Portioniereinrichtung vorteilhaft, bei welcher das Portionierelement dazu eingerichtet ist, während einer Rotationsbewegung in die Portionierkammer eingeleitete Körner, welche bisher nicht von dem Portionierelement zu einer Kornportion zusammengeführt wurden, mit den Körnern der zumindest einen in der Portionierkammer verbliebenen Pufferportion zu einer Kornportion zusammenzuführen. Mittels der Teilungseinrichtung ist dann diese Kornportion in eine aus der Portionierkammer auszuleitende Abgabeportion und zumindest eine in der Portionierkammer verbleibende Pufferportion teilbar. Die Pufferportion besteht dann vorzugsweise aus neu in die Portionierkammer eingeleiteten Körnern, welche bisher nicht von dem Portionierelement zu einer Kornportion zusammengeführt wurden, und Körnern der in der Portionierkammer verbliebenen Pufferportionen. Die Abgabeportion besteht dann vorzugsweise aus neu in die Portionierkammer eingeleiteten Körnern, welche bisher nicht von den Portionierelement zu einer Kornportion zusammengeführt wurden, und Körnern der in der Portionierkammer verbliebenen Pufferportionen. Wenn keine neuen Körner während der Rotationsbewegung des Portionierelements in die Portionierkammer eingeleitet werden, beispielsweise aufgrund einer temporären Unterbrechung der Kornzuführung, stellt die in der Portionierkammer verbliebene Pufferportion die Kornportion dar, welche von der Teilungseinrichtung wieder in eine Pufferportion und eine Abgabeportion geteilt wird. Das Portionierelement ist vorzugsweise dazu eingerichtet, die in der Portionierkammer verbliebene Pufferportion während einer Rotationsbewegung weiter durch die Portionierkammer zu bewegen.

In einer anderen Ausführungsform der erfindungsgemäßen Portioniereinrichtung wird die Portionierkammer in Radialrichtung zumindest abschnittsweise von einer Innenmantelfläche begrenzt, wobei das Portionierelement dazu eingerichtet ist, die Kornportion, die Abgabeportion und/oder die Pufferportion an der Innenmantelfläche entlang zu führen. Die Innenmantelfläche ist vorzugsweise abschnittsweise umlaufend ausgebildet. Die Innenmantelfläche ist vorzugsweise Bestandteil einer Bewandung des Gehäuses der Portioniereinrichtung. Das Portionierelement kann als rotierend angetriebener Portionierflügel ausgebildet sein, welcher sich in der Portionierkammer befindende Körner während der Rotationsbewegung einsammelt und vor sich her schiebt. Durch die Zentrifugalkraft werden die Körner während der Rotationsbewegung des Portionierelements radial nach außen bewegt und sammeln sich an der Innenmantelfläche an.

In einer Weiterbildung der erfindungsgemäßen Portioniereinrichtung weist die Teilungseinrichtung ein Trennelement auf, welches sich abschnittsweise, vorzugsweise entlang der Innenmantelfläche, erstreckt und dazu eingerichtet ist, die, vorzugsweise an der Innenmantelfläche entlang geführte, Kornportion in die Abgabeportion und die zumindest eine Pufferportion zu teilen. Das Trennelement ist vorzugsweise derart angeordnet und ausgebildet, dass die Kornportion in nur eine Abgabeportion und nur eine Pufferportion geteilt wird. Die Abgabeportion und die Pufferportion können dabei im Wesentlichen die gleiche Kornmenge aufweisen. Alternativ kann das Trennelement auch derart angeordnet und ausgebildet sein, dass eine ungleichmäßige Kornmengenteilung erfolgt, sodass die Abgabeportion größer als die Pufferportion oder die Pufferportion größer als die Abgabeportion ist. Das Mengenverhältnis der Abgabeportion und der Pufferportion kann auch über das Trennelement einstellbar sein.

Darüber hinaus ist eine erfindungsgemäße Portioniereinrichtung vorteilhaft, bei welcher das Trennelement als Trennsteg ausgebildet ist. Vorzugsweise nimmt die Höhe des Trennstegs in Rotationsrichtung des Portionierelements zumindest abschnittsweise zu. Durch die zunehmende Höhe des Trennstegs erfolgt keine abrupte Portionstrennung, sondern eine über einen gewissen Drehwinkel des Portionierelements andauernde und fortschreitende Portionsteilung. Eine Verkantung oder Blockade des Portionierelements sowie eine übermäßige Stoßbeanspruchung des Portionierelements während der Portionsbildung werden somit effektiv vermieden.

In einer anderen bevorzugten Ausführungsform der erfindungsgemäßen Portioniereinrichtung weist das Portionierelement eine Kontaktfläche auf, mittels welcher die Kornportion, die Abgabeportion und/oder die Pufferportion an der Innenmantelfläche entlanggeführt werden, wobei die Kontaktfläche vorzugsweise einen Schlitz zur Aufnahme des Trennelements aufweist. Der Schlitz in der Kontaktfläche des Portionierelements dient zur Aufnahme des Trennelements innerhalb des Drehwinkelbereichs, entlang welchem sich das Trennelement erstreckt. Der Schlitz kann beispielsweise mittig in der Kontaktfläche angeordnet sein. In diesem Fall erfolgt die Teilung der Kornportionen in die Abgabeportion und die Pufferportion vorzugsweise derart, dass die Abgabeportion und die Pufferportion im Wesentlichen die gleiche Kornmenge aufweisen. Der Schlitz kann jedoch auch nicht-mittig angeordnet sein, wenn die Position des Trennelements dies erfordert. In diesem Fall weisen die Abgabeportion und die Pufferportion vorzugsweise voneinander abweichende Kornmengen auf.

In einer weiteren bevorzugten Ausführungsform der erfindungsgemäßen Portioniereinrichtung ist vorgesehen, dass das Trennelement in einem radial von dem Portionierelement beabstandeten Bereich angeordnet ist. Infolge dieser Weiterbildung ist das Portionierelement vollflächig ausgebildet, so dass die Kornportion besonders zuverlässig zusammengeführt wird. Die Teilung der Kornportion in die Abgabeportion und die Pufferportion wird in einem sich, vorzugsweise tangential, an den von dem Portionierlement überstrichenen Bereich anschließendem Teil der Portioniereinrichtung, nämlich einem vorzugsweise dafür vorgesehenen Teil der Portionierkammer, durchgeführt, so dass keine Anpassung zwischen Trennelement und Portionierelement notwendig ist. Die Kornportion wird durch die Drehbewegung des Portionierelementes an den Bereich, in dem das Trennelement in dieser Weiterbildung angeordnet ist, abgegeben und mit Hilfe der vorhandenen Fliehkraft aufgeteilt, so dass die Abgabeportion aus der Portionierkammer ausleitbar ist und Pufferportion in der Portionierkammer verbleibt.

In einer anderen Ausführungsform der erfindungsgemäßen Portioniereinrichtung weist die Innenmantelfläche zumindest abschnittsweise eine Kerbung auf, wobei sich der Grund der Kerbung in Umfangsrichtung erstreckt. Vorzugsweise teilt das Trennelement die Innenmantelfläche im Bereich des Grundes der Kerbung in zwei sich jeweils in Umfangsrichtung erstreckende Teilflächen. Die von dem Portionierelement während der Rotationsbewegung eingesammelten Körner sammeln sich vorzugsweise zunächst im Bereich des Grundes der Kerbung an und bilden dort eine Portion aus. Die Kerbung ist gegenüber der Drehachse des Portionierelements konkav ausgeführt, sodass sich ein doppelter Konus ergibt, der unter Einwirkung der Zentrifugalkräfte die von dem Portionierelement eingesammelten Körner zusammenführt.

In einer weiteren bevorzugten Ausführungsform der erfindungsgemäßen Portioniereinrichtung weist die Teilungseinrichtung eine Trennstufe auf, welche die Innenmantelfläche in zumindest zwei radial voneinander beabstandete sich in Umfangsrichtung erstreckende Teilflächen teilt. Die Höhe der Trennstufe und die radiale Beabstandung der sich in Umfangsrichtung erstreckenden Teilflächen kann sich in Umfangsrichtung verändern. Vorzugsweise nimmt die Höhe der Trennstufe und die radiale Beabstandung der sich in Umfangsrichtung erstreckenden Teilflächen in Rotationsrichtung des Portionierelements zu, sodass ein Teil der Körner, nämlich die Pufferportion, sich im Anfangsbereich der Trennstufe von den Portionierelement löst und mangels einer Führung durch das Portionierelement dann von dem Portionierelement überholt wird. Vorzugsweise erstreckt sich der Abgabepfad entlang einer sich in Umfangsrichtung erstreckenden Teilfläche und der Pufferpfad erstreckt sich entlang einer anderen sich in Umfangsrichtung erstreckenden Teilfläche.

Die erfindungsgemäße Portioniereinrichtung wird ferner dadurch vorteilhaft weitergebildet, dass eine Teilfläche dazu eingerichtet ist, die Abgabeportion zu führen und zumindest eine andere Teilfläche dazu eingerichtet ist, die zumindest eine Pufferportion zu führen. Über die Trennstufe zwischen den Teilflächen erfolgt eine Separierung der Abgabeportion von der Pufferportion, sodass die Abgabeportion aus der Portionierkammer ausgeleitet werden kann, wobei die Pufferportion gleichzeitig in der Portionierkammer verbleibt.

In einer weiteren Ausführungsform der erfindungsgemäßen Portioniereinrichtung weist die Teilungseinrichtung eine oder mehrere Prallflächen auf, an welchen Körner der Kornportion derart abprallen, dass die an der einen oder den mehreren Prallflächen abprallenden Körner als Pufferportion in der Portionierkammer verbleiben. Die Körner, welche nicht an der einen oder den mehreren Prallflächen abprallen, verlassen als Abgabeportion die Portionierkammer bzw. die Portioniereinrichtung.

Es ist darüber hinaus eine erfindungsgemäße Portioniereinrichtung bevorzugt, bei welcher die Teilungseinrichtung eine oder mehrere Kammerverbreiterungen der Portionierkammer umfasst, über welche die zumindest eine Pufferportion an einem Kammerauslass der Portionierkammer vorbeiführbar ist. Die von dem Portionierelement geführten Körner, welche nicht an dem Kammerauslass der Portionierkammer vorbeigeführt werden, verlassen als Abgabeportion die Portionierkammer bzw. die Portioniereinrichtung.

Die der Erfindung zugrundeliegende Aufgabe wird ferner durch eine Landmaschine der eingangs genannten Art gelöst, wobei eine, mehrere oder sämtliche Portioniereinrichtungen der erfindungsgemäßen Landmaschine nach einer der vorstehend beschriebenen Ausführungsformen ausgebildet sind. Hinsichtlich der Vorteile und Modifikationen der erfindungsgemäßen Landmaschine wird somit auf die Vorteile und Modifikationen der erfindungsgemäßen Portioniereinrichtung verwiesen.

Die erfindungsgemäße Landmaschine kann beispielsweise eine Sämaschine, eine Maschine zum Ablegen von Dünger ohne Säfunktion oder eine Maschine zum kombinierten Ausbringen von Saatgut und Dünger auf eine landwirtschaftliche Nutzfläche sein.

Die der Erfindung zugrundeliegende Aufgabe wird ferner durch ein Verfahren der eingangs genannten Art gelöst, wobei im Rahmen des erfindungsgemäßen Verfahrens eine erzeugte Kornportion in eine aus der Portionierkammer auszuleitende Abgabeportion und zumindest eine in der Portionierkammer verbleibende Pufferportion mittels einer Teilungseinrichtung geteilt wird. Das Verfahren wird vorzugsweise mittels einer Portioniereinrichtung nach einer der vorstehend beschriebenen Ausführungsformen ausgeführt. Hinsichtlich der Vorteile und Modifikationen des erfindungsgemäßen Verfahrens wird somit auf die Vorteile und Modifikationen der erfindungsgemäßen Portioniereinrichtung verwiesen.

Das Teilen der erzeugten Kornportion in eine aus der Portionierkammer auszuleitende Abgabeportion und zumindest eine in der Portionierkammer verbleibende Pufferportion erfolgt vorzugsweise prozentual bzw. anteilig. Beispielsweise können die Portionsgrößen der Abgabeportion und der Pufferportion im Wesentlichen übereinstimmen. Alternativ können die Portionsgrößen der Abgabeportion und der Pufferportion voneinander abweichen.

In einer bevorzugten Ausführungsform des erfindungsgemäßen Verfahrens wird die Abgabeportion innerhalb der Portionierkammer entlang eines Abgabepfads bewegt. Vorzugsweise wird die Abgabeportion entlang des Abgabepfads aus der Portioniereinrichtung ausgeleitet. Das Verfahren kann ferner das Bewegen der zumindest einen Pufferportion innerhalb der Portionierkammer entlang zumindest eines Pufferpfads umfassen. Vorzugsweise wird die zumindest eine Pufferportion an einem Kammerauslass der Portionierkammer entlang des zumindest einen Pufferpfads vorbeigeführt. Das Verfahren kann ferner das Entlangführen der Kornportion, der Abgabeportion und/oder der Pufferportion an einer Innenmantelfläche, welche die Portionierkammer in Radialrichtung zumindest abschnittsweise begrenzt, umfassen.

In einer weiteren Ausführungsform des erfindungsgemäßen Verfahrens erfolgt ein Teilen der an der Innenmantelfläche entlang geführten Kornportion in die Abgabeportion und die zumindest eine Pufferportion mittels eines Trennelements der Teilungseinrichtung, welches sich abschnittsweise entlang der Innenmantelfläche erstreckt. Alternativ oder zusätzlich wird die Abgabeportion entlang einer Teilfläche der Innenmantelfläche geführt und die zumindest eine Pufferportion wird entlang zumindest einer anderen Teilfläche der Innenmantelfläche geführt. Die die Abgabeportion führende und die zumindest eine andere die zumindest eine Pufferportion führende Teilfläche sind vorzugsweise radial beabstandet voneinander und/oder erstrecken sich in Umfangsrichtung.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Portioniereinrichtung in einer perspektivischen Darstellung;
- Fig. 2: die in der Fig. 1 abgebildete Portioniereinrichtung in einer weiteren perspektivischen Darstellung;
- Fig. 3: die in der Fig. 1 abgebildete Portioniereinrichtung in einer Schnittdarstellung;
- Fig. 4: ein weiteres Ausführungsbeispiel der erfindungsgemäßen Portioniereinrichtung in einer perspektivischen Darstellung;
- Fig. 5: die in der Fig. 4 abgebildete Portioniereinrichtung in einer weiteren perspektivischen Darstellung;
- Fig. 6: die in der Fig. 4 abgebildete Portioniereinrichtung in einer Schnittdarstellung;
- Fig. 7: ein weiteres Ausführungsbeispiel der erfindungsgemäßen Portioniereinrichtung in einer perspektivischen Darstellung;
- Fig. 8: die in der Fig. 7 abgebildete Portioniereinrichtung in einer weiteren perspektivischen Darstellung;
- Fig. 9: die in der Fig. 7 abgebildete Portioniereinrichtung in einer Schnittdarstellung;
- Fig. 10: ein weiteres Ausführungsbeispiel der erfindungsgemäßen Portioniereinrichtung in einer perspektivischen Darstellung;
- Fig. 11: die in der Fig. 10 abgebildete Portioniereinrichtung in einer weiteren perspektivischen Darstellung;
- Fig. 12: die in der Fig. 10 abgebildete Portioniereinrichtung in einer Schnittdarstellung; und
- Fig. 13: ein weiteres Ausführungsbeispiel der erfindungsgemäßen Portioniereinrichtung in Seitenansicht.

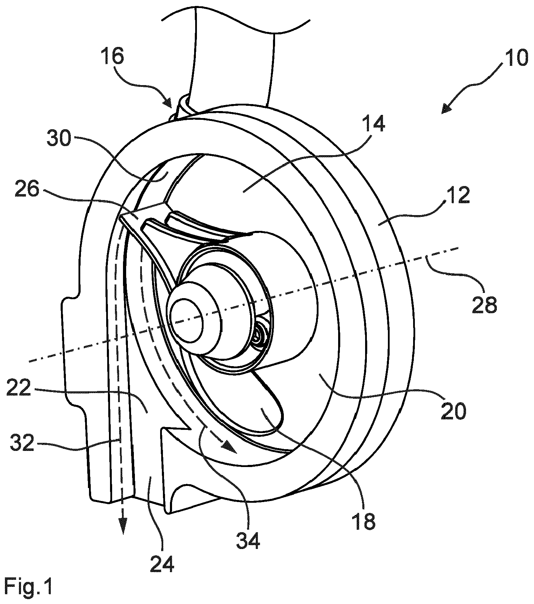

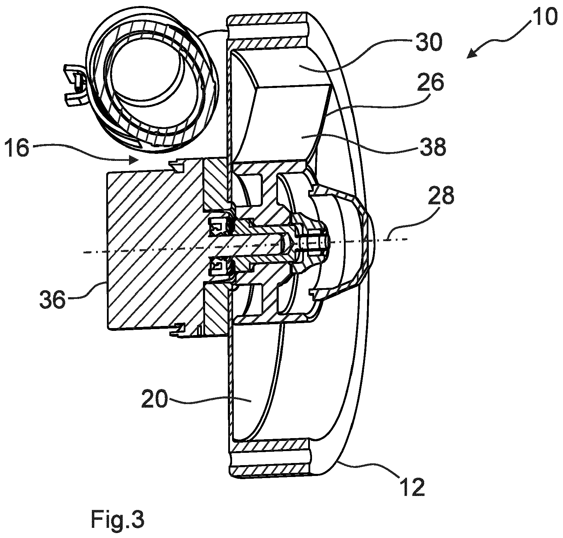

Die Fig. 1 bis 3 zeigen eine Portioniereinrichtung 10 für körniges Material, nämlich für Dünger oder anderes derartig körniges Material, wie beispielsweise auch als Mikrogranulat bezeichnete Nährstoffmittel oder körnige Pflanzenschutzmittel. Die Portioniereinrichtung 10 kann eine von mehreren Portioniereinrichtungen einer Landmaschine sein, mittels welchen die Landmaschine Düngerportionen zum Ablegen auf eine landwirtschaftliche Nutzfläche erzeugen kann. Die Landmaschine kann beispielsweise eine Sämaschine sein, welche dazu eingerichtet ist, zusätzlich zu dem Saatgut auch Düngerportionen auf eine landwirtschaftliche Nutzfläche abzulegen.

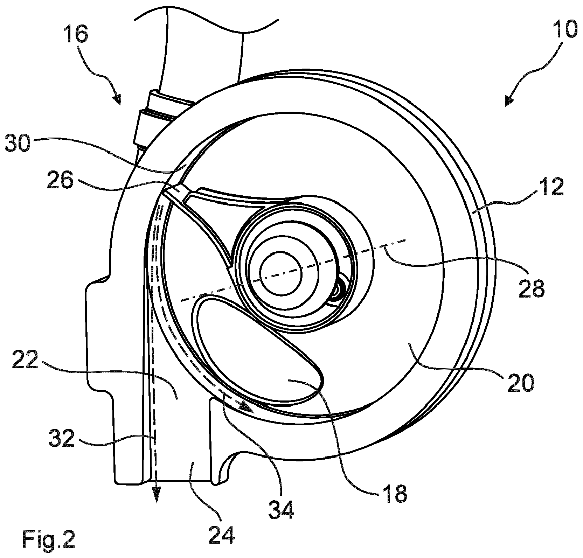

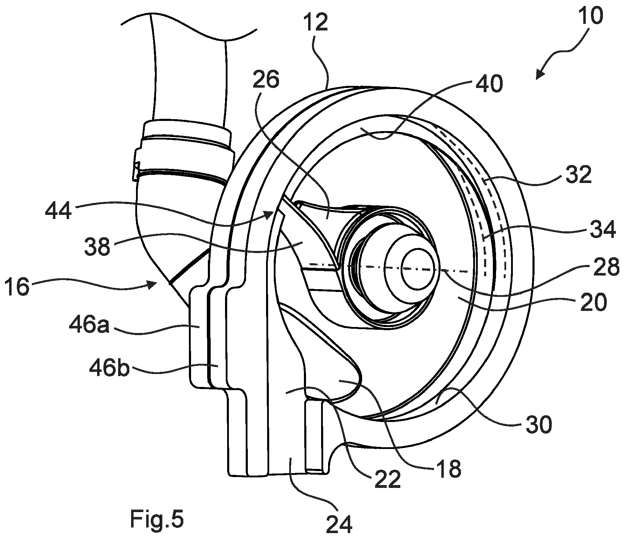

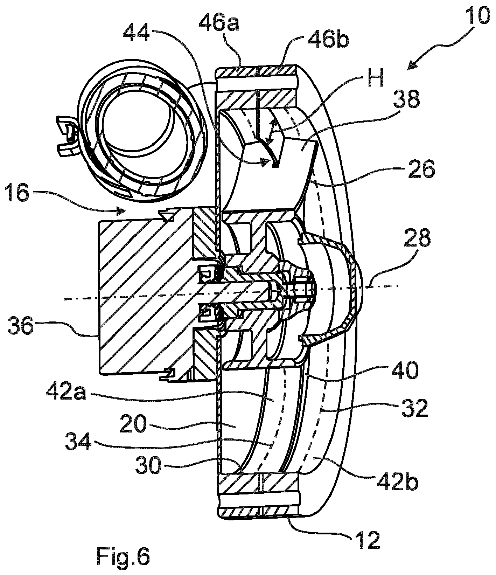

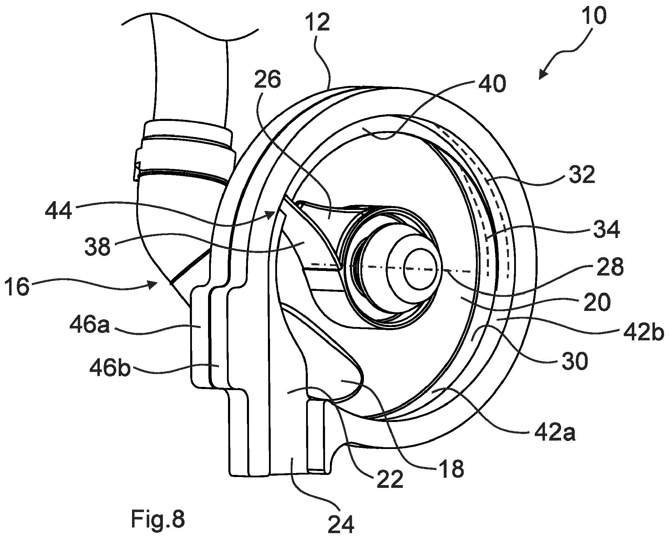

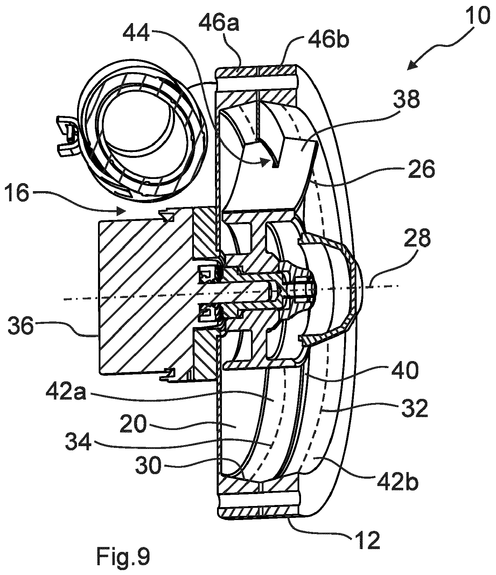

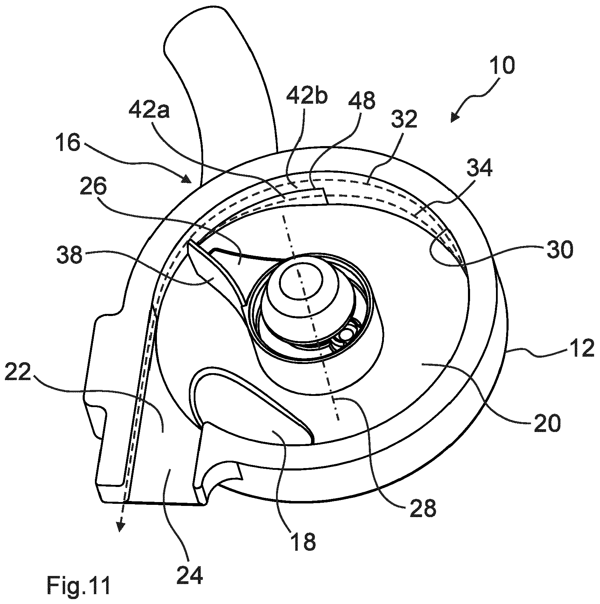

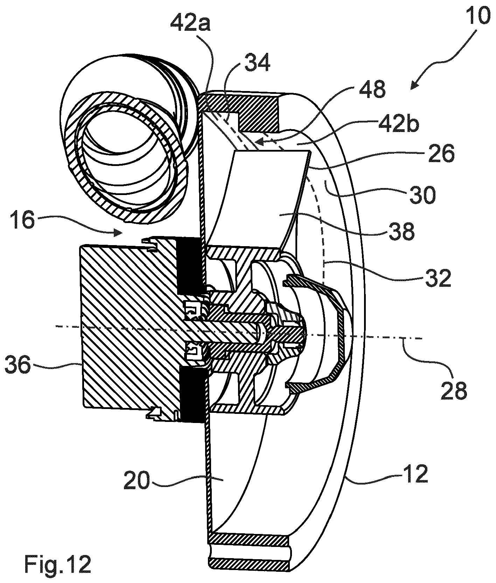

Die Portioniereinrichtung 10 weist ein mehrteiliges Gehäuse 12 aus Kunststoff auf. Das Gehäuse 12 umfasst einen hier durchsichtig ausgeführten Gehäusedeckel 14, welcher zerstörungsfrei lösbar und abnehmbar an einem Basiskörper des Gehäuses 12 befestigt ist. In den weiteren Figuren 2 bis 13 ist der Gehäusedeckel 12 demontiert und gibt den Blick auf das Innere der Portioniereinrichtung 10 frei.

Die Portioniereinrichtung 10 weist einen Einlasskanal 16 auf, über welchen eine Materialströmung in die Portioniereinrichtung 10 einleitbar ist. Das körnige Material kann dabei beispielsweise pneumatisch in die Portioniereinrichtung 10 gefördert werden. Alternativ kann das körnige Material unter Schwerkrafteinwirkung in die Portioniereinrichtung 10 hineinfallen. Der Einlasskanal 16 ist mit einer Einspeiseöffnung 18 verbunden, über welche das körnige Material in eine Portionierkammer 20 der Portioniereinrichtung 10 einleitbar ist. Die Portionierkammer 20 befindet sich in dem Gehäuse 12. Die Einspeiseöffnung 18 befindet sich an einer Stirnseite der Portionierkammer 20. Die Portionierkammer 20 wird in Radialrichtung abschnittsweise von einer Innenmantelfläche 30 begrenzt. Die Innenmantelfläche 30 ist umlaufend ausgebildet und Bestandteil einer Bewandung des Gehäuses 12. Die Innenmantelfläche 30 wird von einem Kammerauslass 22 unterbrochen. Innerhalb der Portionierkammer 20 werden aus den eingeleiteten Düngerkörnern Abgabeportionen gebildet, welche über den Kammerauslass 22 aus der Portionierkammer 20 herausgeschleudert werden. Der Kammerauslass 22 ist mit einem Auslasskanal 24 verbunden, über welchen die gebildeten Abgabeportionen die Portioniereinrichtung 10 verlassen.

Innerhalb der Portionierkammer 20 ist ein als Portionierflügel ausgebildetes Portionierelement 26 angeordnet, welches von einem elektrischen Antrieb 36 rotatorisch angetrieben wird. Der elektrische Antrieb 36 ist ein Elektromotor. Das Portionierelement 26 führt innerhalb der Portionierkammer 20 eine Rotationsbewegung aus und führt die sich innerhalb der Portionierkammer 20 befindenden Körner während der Rotationsbewegung zu einer Kornportion zusammen. Die sich innerhalb der Portionierkammer 20 befindenden Körner werden von dem Portionierelement 26 während der Rotationsbewegung eingesammelt und unter Fliehkrafteinwirkung in Richtung der Innenmantelfläche 30 bewegt. Das Portionierelement 26 schiebt die eingesammelten Körner bis zu dem Kammerauslass 22 vor sich her. Der Kammerauslass 22 ist Bestandteil einer Teilungseinrichtung, mittels welcher die zuvor erzeugte Kornportion in eine aus der Portionierkammer 20 auszuleitende Abgabeportion und eine in der Portionierkammer 20 verbleibende Pufferportion teilbar ist.

Die Portioniereinrichtung 10 weist einen Abgabepfad 32 für die aus der Portionierkammer 20 auszuleitende Abgabeportion und einen Pufferpfad 34 für die in der Portionierkammer 20 verbleibende Pufferportion auf. Die Abgabeportion wird innerhalb der Portionierkammer 20 entlang des Abgabepfads 32 bewegt und entlang des Abgabepfads 32 aus der Portioniereinrichtung 10 ausgeleitet. Die Pufferportion wird innerhalb der Portionierkammer 20 entlang des Pufferpfads 34 bewegt und entlang des Pufferpfads 34 an dem Kammerauslass 22 der Portionierkammer 20 vorbeigeführt. Das entlang des Pufferpfads 34 bewegte körnige Material der Pufferportion verbleibt somit in der Portionierkammer 20.

Während der Rotationsbewegung des Portionierelements 26 sind bereits neue Körner in die Portionierkammer 20 eingeleitet worden, welche bisher nicht von dem Portionierelement 26 zu einer Kornportion zusammengeführt wurden. Nachdem das Portionierelement 26 den Kammerauslass 22 passiert hat, sammelt das Portionierelement 26 die während der Rotationsbewegung neu in die Portionierkammer 20 eingeleiteten Körner ein und führt diese mit den Körnern der in der Portionierkammer 20 verbliebenen Pufferportion zu einer Kornportion zusammen. Diese Kornportion wird dann im Bereich des Kammerauslasses 22 wieder in eine aus der Portionierkammer 20 auszuleitende Abgabeportion und eine in der Portionierkammer 20 verbleibende Pufferportion geteilt. Die auf diese Weise gebildete Pufferportion besteht dann aus neu in die Portionierkammer 20 eingeleiteten Körnern und Körnern der zuletzt erzeugten und in der Portionierkammer 20 verbliebenen Pufferportion. Die Abgabeportion besteht ebenfalls aus neu in die Portionierkammer 20 eingeleiteten Körnern und Körnern der zuletzt erzeugten und in der Portionierkammer 20 verbliebenen Pufferportion. Wenn keine neuen Körner während der Rotationsbewegung des Portionierelements 26 in die Portionierkammer 20 eingeleitet werden, stellt die in der Portionierkammer 20 verbliebene Pufferportion die Kornportion dar, welche im Bereich des Kammerauslasses 22 wieder in eine Pufferportion und eine Abgabeportion geteilt wird.

Das Portionierelement 26 führt beim Einsammeln der sich in der Portionierkammer 20 befindenden Körner eine Rotationsbewegung um eine Rotationsachse 28 aus. Zum Bewegen der eingesammelten Körner weist das Portionierelement 26 eine Kontaktfläche 38 auf, mittels welcher die eingesammelten Körner während einer Rotationsbewegung des Portionierelements 26 vor dem Portionierelement 26 hergeschoben werden.

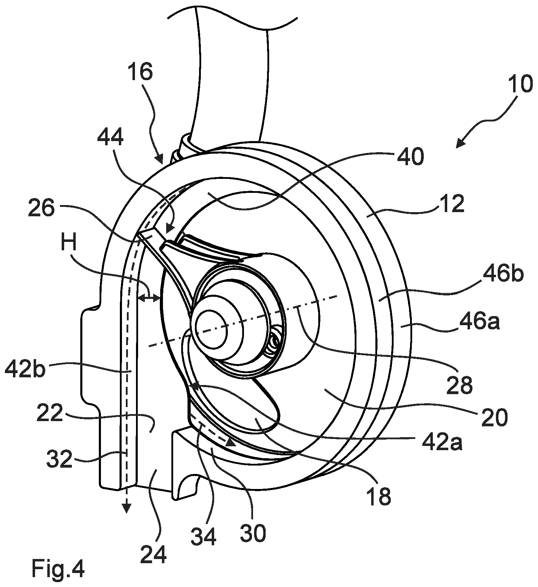

Die in den Fig. 4 bis 6 dargestellte Portioniereinrichtung 10 weist einen ähnlichen Aufbau wie die in den Fig. 1 bis 3 dargestellte Portioniereinrichtung 10 auf. Jedoch weist das Gehäuse 12 der Portioniereinrichtung 10 zwei Gehäuseteile 46a, 46b auf, wobei zwischen den Gehäuseteilen 46a, 46b ein Trennelement 40 angeordnet ist, welches sich in die Portionierkammer 20 erstreckt. Das Trennelement 40 ist Bestandteil der Teilungseinrichtung und erstreckt sich abschnittsweise entlang der Innenmantelfläche 30. Das Trennelement 40 ist dazu eingerichtet, die an der Innenmantelfläche 30 entlang geführte Kornportion in die Abgabeportion und die Pufferportion zu teilen. Dabei ist das Trennelement 40 derart angeordnet und ausgebildet, dass die erzeugte Abgabeportion und die erzeugte Pufferportion im Wesentlichen die gleiche Portionsgröße aufweisen. Über eine alternative Anordnung bzw. Ausbildung des Trennelements 40 können auch anderen Trennverhältnisse herbeigeführt werden. Das Trennelement 40 ist als Trennsteg ausgebildet, wobei die Höhe H des Trennstegs in Rotationsrichtung des Portionierelements 26 zunimmt. Durch die zunehmende Höhe H des Trennstegs erfolgt keine abrupte Portionstrennung, sondern eine über einen gewissen Drehwinkel des Portionierelements 26 andauernde und fortschreitende Portionsteilung. Die Kontaktfläche 38 des Portionierelements 26 weist einen Schlitz 44 zur Aufnahme des Trennelements 40 auf.

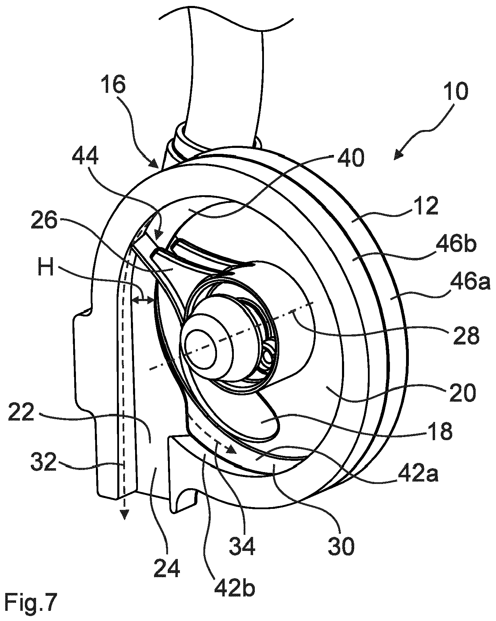

Zusätzlich zu dem Trennelement 40 weist die in den Fig. 7 bis 9 dargestellte Portioniereinrichtung 10 eine Kerbung an der Innenmantelfläche 30 auf. Der Grund der Kerbung erstreckt sich in Umfangsrichtung. Das Trennelement 40 teilt die Innenmantelfläche 30 im Bereich des Grundes der Kerbung in zwei sich jeweils in Umfangsrichtung erstreckende Teilflächen 42a, 42b. Der Pufferpfad 34, entlang welchem sich die Pufferportion bewegt, verläuft entlang der Teilfläche 42a. Der Abgabepfad 32, entlang welchem sich die Abgabeportion bewegt, verläuft entlang der Teilfläche 42b. Die Kerbung ist gegenüber der Rotationsachse 28 des Portionierelements 26 konkav ausgeführt. Unter Einwirkung der Zentrifugalkräfte sorgt die Kerbung für eine Ansammlung der eingesammelten Körner im Bereich des Grundes der Kerbung. Die Kontaktfläche 38 des Portionierelements ist an die Kerbenform angepasst, sodass sich zwischen der Innenmantelfläche 30 und der Außenkontur der Kontaktfläche 38 ein Luftschlitz konstanter Breite ergibt.

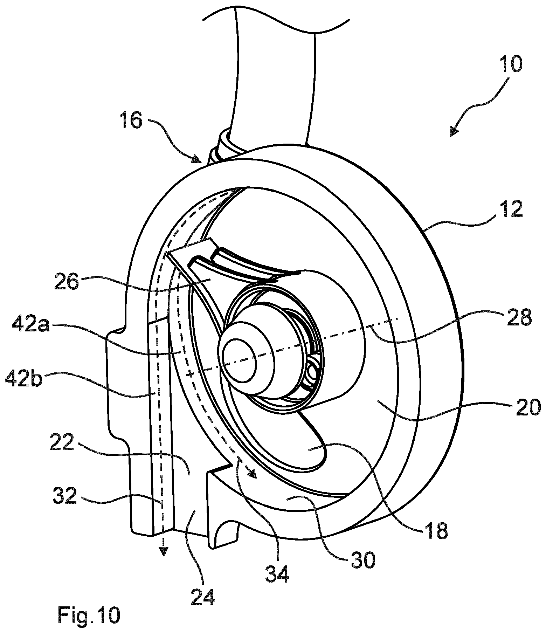

In den Fig. 10 bis 12 ist eine Portioniereinrichtung 10 dargestellt, deren Teilungseinrichtung anstatt eines Trennelements und einer Kerbung an der Innenmantelfläche 30 eine Trennstufe 48 aufweist. Die Trennstufe 48 teilt die Innenmantelfläche 30 in zwei radial voneinander beabstandete und sich in Umfangsrichtung erstreckende Teilflächen 42a, 42b. Die Höhe der Trennstufe 48 und somit auch die radiale Beabstandung der sich in Umfangsrichtung erstreckenden Teilflächen 42a, 42b nimmt in Rotationsrichtung des Portionierelements 26 zu, sodass ein Teil der Körner, nämlich die Pufferportion, sich von dem Portionierelement 26 lösen kann und von dem Portionierelement 26 überholt wird. Dabei verläuft der Pufferpfad 34 entlang der Teilfläche 42a und der Abgabepfad 32 verläuft entlang der Teilfläche 42b. Somit dient die Teilfläche 42a zum Führen der Pufferportion und die Teilfläche 42b dient zum Führen der Abgabeportion. Die Abgabeportion wird aus der Portionierkammer 20 und aus der Portioniereinrichtung 10 ausgeleitet. Die Pufferportion verbleibt in der Portionierkammer 20 und wird mit zwischenzeitlich neu in die Portionierkammer 20 eingeleiteten Körnern zu einer Kornportion zusammengeführt, wobei diese Kornportion dann wieder in eine Abgabeportion und eine Pufferportion geteilt wird.

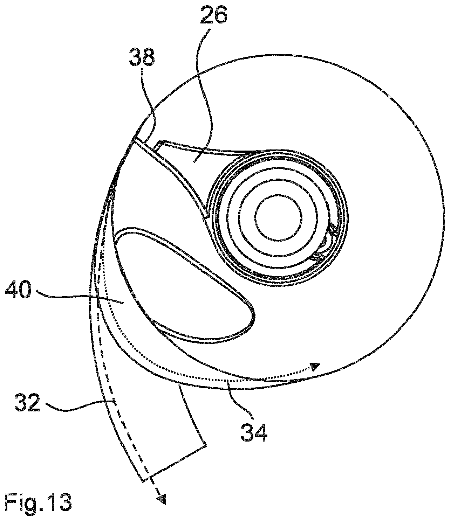

Die in Fig. 13 gezeigte Portioniereinrichtung 10 bildet eine Mischform der in den Fig. 4 bis 6 dargestellten Portioniereinrichtung 10 mit dem Trennelement 40 und der in Fig. 10 bis 12 abgebildeten Portioniereinrichtung 10 mit der Trennstufe 48. Bei dieser Portioniereinrichtung 10 in Fig. 13 ist ein Trennelement 40 in einem radial von dem Portionierelement 26 respektive der Kontaktfläche 38 beabstandeten Bereich angeordnet. Das Trennelement 40 befindet sich außerhalb des von dem Portionierelement 26 überstrichenen Radius. In diesem Fall verlaufen sowohl der Pufferpfad 34 als auch der Abgabepfad 32 entlang eines radial von der Innenmantelfläche 30 zunehmend beabstandeten Pfades, wobei dieser Pfad durch das Trennelement 40 geteilt ist. Das Portionierelement 26 bzw. die Kontaktfläche 38 überstreicht somit nur die Kante des Trennelementes 40 und kann vollflächig ausgeführt sein. Der Abgabepfad 32 wird, wie gewohnt, aus der Portioniereinrichtung 10 ausgeleitet und verläuft bei dieser Portioniereinrichtung 10 in Fig.13 vor dem Trennelement 40, während sich auf dem Pufferpfad 34, der hinter dem Trennelement 40 verläuft, bewegende Körner in der Portioniereinrichtung 10 verbleiben. Hierzu ist der radiale Abstand des Pufferpfades 34, nachdem der Abgabepfad 32 ausgeleitet ist, wieder reduziert, so dass sich ein zumindest teilweise sichelförmiger Bereich ergibt in dem das Trennelement 40 angeordnet ist. Der Abgabepfad 32 schließt sich ebenso wie der Pufferpfad 34 tangential an die Innenmantelfläche 30 an, wobei die beiden Pfade 32, 34 durch das radial von dem Portionierelement 26 beabstandet angeordnete Trennelement 40 voneinander getrennt sind. Diese Anordnung des Trennelements 40 in dem radial vom Portionierelement 26 beabstandeten Bereich bewirkt, dass sowohl der Abgabepfad 32 als auch der Pufferpfad 34 in einem der Trennstufe 48 ähnlichen Bereich liegen, in dem nämlich die Körner sich von dem Portionierelement 26 gelöst haben und von dem Portionierelement 26 überholt werden.

### Bezugszeichenliste

- 10: Portioniereinrichtung
- 12: Gehäuse
- 14: Gehäusedeckel
- 16: Einlasskanal
- 18: Einspeiseöffnung
- 20: Portionierkammer
- 22: Kammerauslass
- 24: Auslasskanal
- 26: Portionierelement
- 28: Rotationsachse
- 30: Innenmantelfläche
- 32: Abgabepfad
- 34: Pufferpfad
- 36: Antrieb
- 38: Kontaktfläche
- 40: Trennelement
- 42a, 42b: Teilflächen
- 44: Schlitz
- 46a, 46b: Gehäuseteile
- 48: Trennstufe

- H: Höhe

## Patentansprüche

1. Portioniereinrichtung (10) für körniges Material, insbesondere Dünger, Pflanzenschutzmittel oder Saatgut, mit
- einer Portionierkammer (20); und
- einem rotatorisch antreibbaren Portionierelement (26), welches in der Portionierkammer (20) angeordnet und dazu eingerichtet ist, beim Ausführen einer Rotationsbewegung sich innerhalb der Portionierkammer (20) befindende Körner zu einer Kornportion zusammenzuführen;
**gekennzeichnet durch** eine Teilungseinrichtung, mittels welcher die Kornportion in eine aus der Portionierkammer (20) auszuleitende Abgabeportion und zumindest eine in der Portionierkammer (20) verbleibende Pufferportion teilbar ist.

2. Portioniereinrichtung (10) nach Anspruch 1,
**gekennzeichnet durch**
- einen Abgabepfad (32), entlang welchem die Abgabeportion innerhalb der Portionierkammer (20) bewegt und/oder aus der Portioniereinrichtung (10) ausgeleitet wird; und/oder
- zumindest einen Pufferpfad (34), entlang welchem die zumindest eine Pufferportion innerhalb der Portionierkammer (20) bewegt und/oder an einem Kammerauslass (22) der Portionierkammer (20) vorbeigeführt wird.

3. Portioniereinrichtung (10) nach Anspruch 1 oder 2,
**dadurch gekennzeichnet, dass** das Portionierelement (26) dazu eingerichtet ist, während einer Rotationsbewegung in die Portionierkammer (20) eingeleitete Körner, welche bisher nicht von dem Portionierelement (26) zu einer Kornportion zusammengeführt wurden, mit den Körnern der zumindest einen in der Portionierkammer (20) verbliebenden Pufferportion zu einer Kornportion zusammenführen.

4. Portioniereinrichtung (10) nach einem der vorstehenden Ansprüche,
**dadurch gekennzeichnet, dass** die Portionierkammer (20) in Radialrichtung zumindest abschnittsweise von einer Innenmantelfläche (30) begrenzt wird, wobei das Portionierelement (26) dazu eingerichtet ist, die Kornportion, die Abgabeportion und/oder die Pufferportion an der Innenmantelfläche (30) entlangzuführen.

5. Portioniereinrichtung (10) nach zumindest einem der vorstehenden Ansprüche,
**dadurch gekennzeichnet, dass** die Teilungseinrichtung ein Trennelement (40) aufweist, welches sich abschnittsweise, vorzugsweise entlang der Innenmantelfläche (30), erstreckt und dazu eingerichtet ist, die, vorzugsweise an der Innenmantelfläche (30) entlanggeführte, Kornportion in die Abgabeportion und die zumindest eine Pufferportion zu teilen.

6. Portioniereinrichtung (10) nach Anspruch 5,
**dadurch gekennzeichnet, dass** das Trennelement (40) als Trennsteg ausgebildet ist, wobei vorzugsweise die Höhe (H) des Trennstegs in Rotationsrichtung des Portionierelements (26) zumindest abschnittsweise zunimmt.

7. Portioniereinrichtung (10) nach Anspruch 5 oder 6,
**dadurch gekennzeichnet, dass** das Portionierelement (26) eine Kontaktfläche (38) aufweist, mittels welcher die Kornportion, die Abgabeportion und/oder die Pufferportion an der Innenmantelfläche (30) entlanggeführt werden, wobei die Kontaktfläche (38) vorzugsweise einen Schlitz (44) zur Aufnahme des Trennelements (40) aufweist.

8. Portioniereinrichtung (10) nach Anspruch 5 oder 6, **dadurch gekennzeichnet, dass** das Trennelement (40) in einem radial von dem Portionierelement (26) beabstandeten Bereich angeordnet ist.

9. Portioniereinrichtung (10) nach einem der Ansprüche 4 bis 8,
**dadurch gekennzeichnet, dass** die Innenmantelfläche (30) zumindest abschnittsweise eine Kerbung aufweist, wobei sich der Grund der Kerbung in Umfangsrichtung erstreckt.

10. Portioniereinrichtung (10) nach einem der Ansprüche 4 bis 9,
**dadurch gekennzeichnet, dass** die Teilungseinrichtung eine Trennstufe (48) aufweist, welche die Innenmantelfläche (30) in zumindest zwei radial voneinander beabstandete sich in Umfangrichtung erstreckende Teilflächen (42a, 42b) teilt.

11. Portioniereinrichtung (10) nach Anspruch 10,
**dadurch gekennzeichnet, dass** eine Teilfläche (42b) dazu eingerichtet ist, die Abgabeportion zu führen und zumindest eine andere Teilfläche (42a) dazu eingerichtet ist, die zumindest eine Pufferportion zu führen.

12. Portioniereinrichtung (10) nach einem der vorstehenden Ansprüche, **dadurch gekennzeichnet, dass** die Teilungseinrichtung eine oder mehrere Prallflächen aufweist, an welchen Körner der Kornportion derart abprallen, dass die an der einen oder den mehreren Prallflächen abprallenden Körner als Pufferportion in der Portionierkammer (20) verbleiben.

13. Portioniereinrichtung (10) nach einem der vorstehenden Ansprüche, **dadurch gekennzeichnet, dass** die Teilungseinrichtung eine oder mehrere Kammerverbreiterungen der Portionierkammer (20) umfasst, über welche die zumindest eine Pufferportion an einem Kammerauslass (22) der Portionierkammer (20) vorbeiführbar ist.

14. Landmaschine, mit
- einer oder mehreren Portioniereinrichtungen (10) für körniges Material;
**dadurch gekennzeichnet, dass** eine, mehrere oder sämtliche Portioniereinrichtungen (10) nach einem der vorstehenden Ansprüche ausgebildet sind.

15. Verfahren zum Portionieren von körnigem Material, insbesondere Dünger oder Saatgut, mittels einer Portioniereinrichtung (10), vorzugsweise mittels einer Portioniereinrichtung (10) nach einem der Ansprüche 1 bis 13, mit dem Schritt:
- rotatorisches Antreiben eines Portionierelements, welches beim Ausführen einer Rotationsbewegung Körner zu einer Kornportion zusammenzuführt, welche sich innerhalb einer Portionierkammer (20) der Portioniereinrichtung (10) befinden;
**gekennzeichnet durch** den Schritt:
- Teilen einer erzeugten Kornportion in eine aus der Portionierkammer (20) auszuleitende Abgabeportion und zumindest eine in der Portionierkammer (20) verbleibende Pufferportion mittels einer Teilungseinrichtung.

16. Verfahren nach Anspruch 15,
**gekennzeichnet durch** zumindest einen der folgenden Schritte:
- Bewegen der Abgabeportion innerhalb der Portionierkammer (20) entlang eines Abgabepfads (32);
- Ausleiten der Abgabeportion aus der Portioniereinrichtung (10) entlang des Abgabepfads (32);
- Bewegen der zumindest einen Pufferportion innerhalb der Portionierkammer (20) entlang zumindest eines Pufferpfads (34);
- Vorbeiführen der zumindest einen Pufferportion an einem Kammerauslass (22) der Portionierkammer (20) entlang des zumindest einen Pufferpfads (34);
- Entlangführen der Kornportion, der Abgabeportion und/oder der Pufferportion an einer Innenmantelfläche (30), welche die Portionierkammer (20) in Radialrichtung zumindest abschnittsweise begrenzt.

17. Verfahren nach Anspruch 16,
**gekennzeichnet durch** zumindest einen der folgenden Schritte:
- Teilen der an der Innenmantelfläche (30) entlanggeführten Kornportion in die Abgabeportion und die zumindest eine Pufferportion mittels eines Trennelements (40) der Teilungseinrichtung, welches sich abschnittsweise entlang der Innenmantelfläche (30) erstreckt;
- Führen der Abgabeportion entlang einer Teilfläche (42b) der Innenmantelfläche (30) und Führen der zumindest einen Pufferportion entlang zumindest einer anderen Teilfläche (42a) der Innenmantelfläche (30), wobei die die Abgabeportion führende Teilfläche (42b) und die zumindest eine andere die zumindest eine Pufferportion führende Teilfläche (42a) radial voneinander beabstandet sind und sich in Umfangrichtung erstrecken.
